Europäisches Patentamt

European Patent Office

Office européen des brevets

(11) Publication number: **0 123 711**
**B1**

# EUROPEAN PATENT SPECIFICATION

(45) Date of publication of patent specification: **17.12.86**

(51) Int. Cl.⁴: **C 08 L 27/06**

(21) Application number: **83104349.2**

(22) Date of filing: **03.05.83**

(54) Polyvinyl chloride composition.

(43) Date of publication of application:
**07.11.84 Bulletin 84/45**

(45) Publication of the grant of the patent:
**17.12.86 Bulletin 86/51**

(84) Designated Contracting States:
**BE DE FR GB IT NL**

(56) References cited:
**FR-A-2 129 709**
**FR-A-2 212 351**
**FR-A-2 223 404**
**FR-A-2 324 660**

(73) Proprietor: **KANEGAFUCHI KAGAKU KOGYO KABUSHIKI KAISHA**
**2-4 Nakanoshima 3-chome**
**Kita-ku Osaka-shi Osaka-fu (JP)**

(72) Inventor: **Fujita, Tamio**
**6-17, 2-chome Takaoka Okubo-cho**
**Akashi-shi Hyogo-ken (JP)**
Inventor: **Nogaoshi, Fumiya**
**9-36, 9-chome Nishimaiko Tarumi-ku**
**Kobe-shi Hyogo-ken (JP)**

(74) Representative: **Vossius & Partner**
**Siebertstrasse 4 P.O. Box 86 07 67**
**D-8000 München 86 (DE)**

Courier Press, Leamington Spa, England.

## Description

The present invention relates to a polyvinyl chloride composition having improved processability, high clarity, and high heat distortion temperature.

Polyvinyl chloride is in general use owing to its outstanding chemical and physical properties. Nevertheless, it is not necessarily satisfactory in heat stability and impact strength, and it requires improvement in processability and heat distortion temperature. In order to overcome these disadvantages, there have been proposed several means including the addition of stabilizers, plasticizers, lubricants, and other chemicals. Improvement through polymer blend is also commonly practiced. Polymer blend accelerates gelation in the molding process of polyvinyl chloride permits deep drawing of moldings, and improves the heat distortion temperature of moldings.

In Japanese Patent Publication No. 5311/1965 there is disclosed a polymer consisting mainly of methyl methacrylate which is claimed to accelerate the gelation of polyvinyl chloride and improve the processability so as to increase elongation at high temperatures. According to this disclosure, the polymer should have a specific viscosity $\eta_{sp}$ higher than 3 (1 g/1000 ml chloroform, 20°C). One to three parts of this polymer are added to 100 parts of polyvinyl chloride to greatly improve the processability in rolling and to give good sheet moldings. However, it was found that if this polymer is added in large quantities, for example 5 to 10 parts, the resulting blend becomes extremely viscous in melt flow, with the result that the mixing resistance increases and the molding is very difficult to perform. Moreover, under the process the moldings are tinged with a yellow color, and a remarkable shrinkage of moldings also occurs.

In Japanese Patent Publication No. 29895/1976 there is disclosed the incorporation of polyvinyl chloride with a methyl methacrylate-α-methylstyrene copolymer. This blending improves the heat distortion temperature of polyvinyl chloride, but has a serious drawback in that ungelled particles occur in large numbers in the sheet extruded from the blend. Moreover, due to the lack of lubrication on the roll mill, the blend is liable to stick to the screw, die, and calendering rolls, making continued operation difficult. These disadvantages are pronounced when high-speed molding is carried out at a high molding temperature.

FR—A—2 223 404 discloses a polyvinyl chloride composition consisting of (I) from 80 to 99,9 parts by weight of polyvinyl chloride and (II) from 20 to 0,1 parts by weight of a methyl methacrylate composition comprising from 10 to 60 weight% of a composition A consisting mainly of methyl methacrylate, from 40 to 80 weight% of a composition B consisting mainly of styrene and from 0 to 40 weight% of a further composition C consisting mainly of methyl methacrylate said composition C having been prepared in the presence of a latex of composition B.

From FR—A—2 324 660 acrylic polymers are known which comprise a first rigid phase obtained by polymerisation of an emulsion or solution of monomers consisting mainly of styrene and an alkyl methacrylate and a second rubber-like phase consisting mainly of alkyl acrylates the second phase having been polymerized in the presence of the first rigid phase.

FR—A—2 212 351 discloses a polyviny chloride composition comprising from 70 to 99,9 parts by weight of polyvinyl chloride and from 0,1 to 30 parts by weight of a methyl methacrylate composition comprising from 51 to 99 weight% of a composition A consisting mainly of methyl methacrylate and an acrylic ester and from 1 to 49 weight% of a composition B consisting mainly of methyl methacrylate.

It is an object of this invention to provide a new polyvinyl chloride composition having high clarity, high heat distortion temperature, improved processability such as elongation at high temperatures and deep drawing, improved release from roll mill, and improved extrudability.

The gist of the invention resides in a polyvinyl chloride composition which comprises (I) 99 to 30 parts (by weight, the same shall apply hereunder) of polyvinyl chloride or a vinyl chloride compolymer in which at least 80% (by weight, the same shall apply hereunder) is vinyl chloride, and (II) 1 to 70 parts of a polymer which is obtained by polymerizing component (B) 1 to 30% of a mixture composed of 40 to 80% of styrene monomer and 60 to 20% of alkyl ester of acrylic acid or alkyl ester of methacrylic acid (said alkyl group having 2 to 18 carbon atoms), in the presence of a polymerization latex of component (A) 99 to 70% of methyl methacrylate polymer or of a copolymer of more than 75% of methyl methacrylate and less than 25% of styrene monomer, said polymer or copolymer having a specific viscosity ($\eta_{sp}$, C = 0.4 g/100 ml benzene, 30°C) lower than 0,6, said polyvinyl chloride composition having improved processability, high clarity, and high heat distortion temperature.

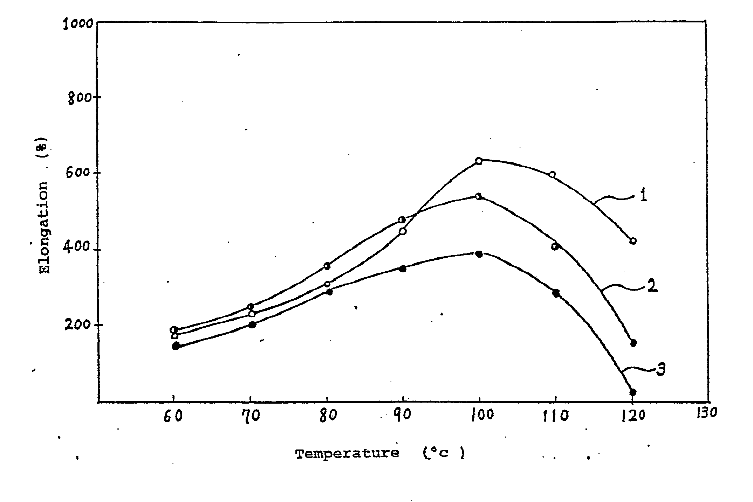

In the drawing, the single figure is a graph showing the relationship between elongation and temperature measured for sheets produced from the polyvinyl chloride compositions prepared from sample (a) in Example 1 and samples (1) and (11) in the Comparative Examples.

Reference number 1 denotes sample (a) in Example 1, and Reference numbers 2 and 3 denote sample (11) and sample (1) in the Comparative Examples, respectively.

(The test pieces were prepared according to JIS K6734 and measurements were carried out at a pulling rate of 200 mm/min.).

The polyvinyl chloride (I) used in this invention is polyvinyl chloride or vinyl chloride copolymer in which at least 80% is vinyl chloride. Examples of the copolymer include vinyl chloride-vinyl acetate copolymer, vinyl chloride-alkyl vinyl ether copolymer, vinyl chloride-ethylene copolymer, and vinyl

2

chloride-propylene copolymer. These polymers may be produced by emulsion polymerization, suspension polymerization, bulk polymerization, and other methods.

The polymer (II) is added for the improvement of processability, elongation at high temperature, and heat distortion temperature, in an amount of 1 to 70 parts, preferably 5 to 50 parts, for 99 to 30 parts of the polyvinyl chloride. If the quantity is less than 1 part, the improvement of the vinyl chloride in processability and heat distortion temperature is not sufficient. If the quantity exceeds 70 parts, the resulting composition is greatly improved in heat distortion temperature but the toughness and other properties of polyvinyl chloride are reduced.

The polymer (II) is composed of a comparatively hard polymer component (A) consisting mainly of methyl methacrylate, and a comparatively soft copolymer component (B) consisting of alkyl ester of acrylic acid or alkyl ester of methacrylic acid and styrene monomer, the latter copolymer being effective in preventing the formation of ungelled particles and the sticking of the resin composition to metal surfaces.

The adequate quantities of component (A) and component (B) are 99 to 70% and 1 to 30%, respectively. If the quantity of component (A) is less than 70%, the resulting composition is not improved in heat distortion temperature, although it does not stick to metal surfaces nor forms ungelled particles which are often found in extruded sheets.

On the other hand, if component (A) exceeds 99% and component (B) is less than 1%, the resulting composition is poor in releasability, although it is improved in heat distortion temperature and elongation at high temperature. In such a case, the resulting composition sticks to the calendering rolls and the extrusion screw and die, making it difficult to carry out molding continuously for a long time. A large number of ungelled particles appear on the molded sheet to impair the clarity and surface smoothness of the sheet.

In order to improve polyvinyl chloride in clarity, elongation at high temperatures, and heat distortion temperature, the polymer for blending should be highly miscible with polyvinyl chloride. Component (A) used in this invention is characteristic for being highly miscible with polyvinyl chloride.

Methyl methacrylate polymer or a copolymer of more than 75% (preferably more than 85%) of methyl methacrylate and less than 25% (preferably less than 15%) of styrene monomer is highly miscible with polyvinyl chloride. However, the copolymer becomes poor in compatibility with polyvinyl chloride when the content of methyl methacrylate is less than 75% and that of styrene is more than 25%. Therefore, the resulting composition is not satisfactory in clarity, elongation at high temperature, and heat distortion temperature. The styrene monomer includes, for example, styrene, α-methylstyrene and other -substituted styrenes; and o-methylstyrene, p-tert-butylstyrene, chlorostyrene, and other nucleus-substituted styrene. They are used individually or in combination .

In order to achieve improved performance, increased flowability, and reduced molding shrinkage of the resulting composition, it is necessary that component (A) should have a specific viscosity lower than 0.6, preferably less than 0.3. If it has a specific viscosity higher than 0,6, the resulting composition is poor in flowability due to increased melt viscosity, which leads to increased mixing torque and poor moldability. Therefore, such a component can only be added in a limited quantity. If a polymer having a specific viscosity higher than 0,6 is added in large quantities, the resulting composition suffers from molding shrinkage and poor appearance.

The methyl methacrylate polymer as a major constituent of component (A) is in essence highly sticky to metal surfaces. Therefore, if component (A) alone is added to polyvinyl chloride, the resulting composition is improved in heat distortion temperature and fabricability such as elongation at high temperature, but it is sticky to the rollers, screw, and die. This hinders continuous sheet molding operation. In addition, the resulting composition gives rise to a large number of ungelled particles that impair the gloss and clarity of sheet. Presumably, this is because polymer component (A) has a high softening point and does not melt completely at the molding temperature of polyvinyl chloride.

Component (B) is effective in solving the problems involved in molding and fabrication. Component (B) is a mixture of 60 to 20% of alkyl ester of acrylic acid or alkyl ester of methacrylic acid and 40 to 80% of styrene monomer. If the content of styrene monomer is more than 80%, component (B) is poor in the effect of preventing sticking, and the resulting composition is poor in clarity. Similarly, if the content of alkyl ester of acrylic acid or alkyl ester of methacrylic acid is more than 60%, the resulting composition is poor in clarity. One kind or more than one kind of alkyl esters of acrylic acid or alkyl esters of methacrylic acid is used, the alkyl esters having 2 to 18 carbon atoms in the alkyl group. The styrene monomer includes styrene and substituted styrene. It is important that the polymerization of component (B) be carried out in the presence of a polymerization latex of component (A). This is a principal feature of this invention.

After polymerization of component (A) the monomer mixture of component (B) is added and polymerized. The polymer of component (A), which is comparatively hard, is covered, entirely or partly, with the polymer of component (B), which is comparatively soft. The resulting polymer flows easily during molding and fabrication.

It is considered that this is one of the reasons why the dispersion in polyvinyl chloride is improved and ungelled particles do not occur in the molded sheet.

If a polymer resulting from uniform mixing of the monomers of component (A) and the monomers of component (B) is blended with polyvinyl chloride, no improvement is made in heat distortion temperature as shown in the Example. On the other hand, if polymer component (A) and polymer component (B) are

**0 123 711**

polymerized separately and then blended with polyvinyl chloride, prevention of ungelled particles in extrusion molding is not satisfactory, although improvement is made in heat distortion temperature, elongation at high temperature, fabricability, and sticking to metal surfaces. In the case where component (A) is polymerized in the presence of the polymer of component (B), no satisfactory results are obtained. In the case where polymer of component (A) and polymer of component (B) are added in the form of dry powder to polyvinyl chloride, the resulting composition provides molded sheet containing a large number of ungelled particles.

According to this invention, it is essential that component (B) be polymerized in the presence of the polymer of component (A). When this method is employed, the resulting polyvinyl chloride composition has improved processability, easy release from roll mill, excellent clarity, high heat distortion temperature, and large elongation at high temperature.

The polymer mixture should preferably be prepared by emulsion polymerization, in which a common emulsifier, a water-soluble or oil-soluble redox-type polymerization initiator, and a proper chain transfer agent are used. The reaction product in the form of a latex is coagulated, washed, dehydrated and dried and thereby formed in to a powder resin.

The polymer mixture may be mixed with polyvinyl chloride in any commonly used manner. The resulting polyvinyl chloride composition may be incorporated with stabilizers, lubricants, colorants, fillers, etc., which are commonly used for polyvinyl chloride, or it is used for molding without such additives. In addition, the polyvinyl chloride composition of this invention may be blended with an impact modifier to impart impact resistance.

The invention is now described with reference to the following examples.

Example 1 and Comparative Examples

Into a reaction vessel equipped with a stirrer and reflux condenser were charged the following materials.

| | |
|---|---|
| Distilled water | 300 parts |
| Dioctylsulfosuccinic ester sodium salt | 3.0 parts |
| Sodium formaldehyde sulfoxylate | 0.5 part |
| Disodium ethylenediaminetetraacetate | 0.01 part |
| Ferrous sulfate | 0.005 part |

The atmosphere in the reactor was replaced with nitrogen gas, and the reactor was heated to 60°C. To the reactor was added dropwise a mixture composed of 72 parts of methyl methacrylate, 8 parts of α-methylstyrene, 0.16 part of tert-dodecylmercaptan, and 0.4 part of cumene hydroperoxide, whereby a polymer latex of component (A) was obtained. Thereafter, to the reactor was added dropwise for polymerization a mixture of component (B) composed of 8 parts of n-butyl acrylate, 12 parts of styrene, 0.1 part of tert-dodecylmercaptan, and 0.1 part of cumene hydroperoxide.

After addition of antioxidant, the resulting polymer latex was subjected to salting-out, filtration, washing, and drying, whereby sample (a) as shown in Table 1 was obtained in the form of powdery polymer.

Using the same reaction vessel as above, polymers of different compositions were prepared from component (A) (methyl methacrylate and α-methylstyrene) and component (B) (n-butyl acrylate and styrene) in the ratios as shown in Table 1.

Twenty parts of the polymer (II) thus obtained was mixed with 100 parts of polyvinyl chloride (I), 2.5 parts of dibutyltin mercaptide stabilizer, and 0.5 part of lubricant, for 5 minutes on a roll mill heated to 180°C. The sheet prepared by this roll mill was then pressed at 190°C under about 50 bar (50 kg/cm²) for 15 minutes. Test pieces were punched out from the pressed sheet, and their physical properties were measured. The results are shown in Table 2. In Comparative Example (11), polyvinyl chloride alone without the polymer (II) was processed.

It is to be noted that the compositions in samples (a), (b), and (c) of this invention, in which 20 parts of the polymer (II) was blended, are 6 to 7°C higher in Vicat softening point than the polyvinyl chloride in Comparative Example (11), and yet are comparable to the polyvinyl chloride in clarity and izod impact strength.

In Comparative Example (1) in which component (A) was composed of methyl methacrylate and α-methylstyrene at a ratio of 70 to 30, the resulting composition was improved only a little in Vicat softening point (81°C) and greatly decreased in light transmittance.

In Comparative Examples (2) and (3), in which the content of n-butyl acrylate in component (B) was 90% and 10%, respectively, the resulting compositions were poor in clarity and high in haze.

In Comparative Example (4), in which the polyvinyl chloride composition was identical in its

4

composition with that of sample (a), the resulting composition was not improved in Vicat softening point because components (A) and (B) were uniformly mixed and polymerized.

In Comparative Example (7), in which component B in polymer (II) was as high as 40%, the resulting polyvinyl chloride composition was improved only a little in Vicat softening point.

Polyvinyl chloride compositions obtained in Comparative Examples (5), (6), (8), (9), and (10) were improved in Vicat softening point and light transmittance, but were not satisfactory in processability and appearance of moldings. More details are given in the following Examples 2 and 3.

It is noted that only the compositions of samples (a), (b), and (c) are improved in heat distortion temperature with no loss of the outstanding clarity of polyvinyl chloride.

### Example 2 and Comparative Examples

In Comparative Example (5), component B was omitted. In Comparative Example (6), the chain transfer agent was reduced to increase the specific viscosity $\eta_{sp}$ of the polymer. In Comparative Example (8), component B was polymerized first and then component A was polymerized, with the same monomer composition to the case of sample (a). In Comparative Example (9), components A and B were polymerized separately and the resulting latices were blended to give the polymer mixture. In Comparative Example (10), components A and B were polymerized separately and the resulting powdery polymers were mixed.

Polyvinyl chloride compositions were prepared by blending 100 parts of polyvinyl chloride (having a degree of polymerization of 680) with 20 parts of the polymer prepared in the above-mentioned Comparative Examples or samples (a) and (b), 2.5 parts of butyltin mercaptide stabilizer, and 0.5 part of lubricant. Blending was carried out at 110°C using a high-speed blender. The resulting polyvinyl chloride compositions were subjected to the following tests.

#### 1. Sheet extrusion molding

The composition was extruded in to a 0.25 mm thick sheet using a single-screw extruder having a screw diameter of 50 mm, a screw compression ratio of 1:3, and an L/D ratio of 22, with a coat-hanger die. The appearance of the sheet was observed.

#### 2. Roll mixing test

The composition was subjected to roll milling at 205°C (roll surface temperature) and at 20 rpm using an 20 cm (8-inch) roll mill. During roll-milling, the composition was removed from the roll mill at proper intervals so as to measure the time for the composition to stick to the roll surface. The appearance of the rolled sheet was observed.

#### 3. Brabender mixing test

In the chamber of a Brabender Plasti-Corder® was placed 55 g of the polyvinyl chloride composition, and mixing was started after 3-minute preheating and torque was measured at a rotor speed of 45 rpm and at a chamber temperature of 180°C.

The results are shown in Table 3.

In Comparative Example (5), in which component B was omitted, the resulting polyvinyl chloride composition gave a hazy rough-surface sheet having a large number of ungelled particles, although it had a high Vicat softening point as shown in Table 2. In Comparative Example (6), in which component A had a specific viscosity higher than the limit specified in this invention, the resulting composition gave very high mixing torque as shown in the Brabender mixing test. Therefore, the composition could not be extruded into a sheet. In addition, the composition was non-sticking in the roll mixing test, but suffered from such an extremely high shrinkage that any sheet of desired thickness was not obtained and the appearance of the sheet was unsatisfactory. In comparative Examples (8), (9), and (10), the polyvinyl chloride composition was prepared in the same composition as in sample (a) but the polymerization was carried out in a different way. The resulting compositions were all as good in release from roll mill, appearance of rolled sheet, and mixing torque as the one in sample (a). However, they resulted in ungelled particles in an extruded sheet.

### Example 3 and Comparative Examples

The polyvinyl chloride compositions obtained in sample (a) and Comparative Example (1) and polyvinyl chloride alone (Comparative Example (11)) were formed into sheets using a roll mill, and the sheets were pressed at 190°C, under about 50 bar (50 kg/cm$^2$), for 5 minutes to give 0.5 mm thick sheets. Test pieces were prepared according to JIS K6734, and they were subjected to tensile test at 60 to 120°C to measure the elongation at high temperatures. The results are shown in the accompanying drawing.

It should be noted that the composition of Comparative Example (1) is poorer in elongation at any temperature than polyvinyl chloride alone in Comparative Example (11), whereas the composition of sample (a) was greatly improved in elongation at 100°C, 110°C, and 120°C.

TABLE 1

Composition of monomer charged (parts by weight)

| Sample No. | Component (A) | | | Component (B) | | | Conversion of polymerization (%) | Specific viscosity of component (A) |
|---|---|---|---|---|---|---|---|---|
| | Methyl meth-acrylate | α-Methyl-styrene | tert-Dodecyl mercaptan | n-Butyl acrylate | Styrene | tert-Dodecyl mercaptan | | |
| Example (a) | 72 | 8 | 0.16 | 8 | 12 | 0.1 | 98 | 0.18 |
| Example (b) | 85 | 10 | 0.19 | 2 | 3 | 0.02 | 98 | 0.18 |
| Example (c) | 68 | 12 | 0.16 | 8 | 12 | 0.1 | 98 | 0.17 |
| Comparative Example 1 | 56 | 24 | 0.16 | 8 | 12 | 0.1 | 96 | 0.17 |
| „ 2 | 72 | 8 | 0.16 | 18 | 2 | 0.1 | 98 | 0.17 |
| „ 3 | 72 | 8 | 0.16 | 2 | 18 | 0.1 | 98 | 0.18 |
| „ 4 | (See remarks 1.) | | | | | | 98 | 0.17 |
| „ 5 | 90 | 10 | 0.20 | 0 | 0 | 0 | 97 | 0.18 |
| „ 6 | 72 | 8 | 0.05 | 8 | 12 | 0.1 | 95 | 1.00 |
| „ 7 | 54 | 6 | 0.12 | 16 | 24 | 0.2 | 97 | 0.18 |
| „ 8 | (See remarks 2.) | | | | | | 97 | 0.18 |
| „ 9 | (See remarks 3.) | | | | | | 99 (comp. A) 97 (comp. B) | 0.18 |
| „ 10 | (See remarks 4.) | | | | | | 99 (comp. A) 97 (comp. B) | 0.18 |
| „ 11 | (See remarks 5.) | | | | | | — | — |

Remarks 1. Same as in sample (a), except that components A and B were uniformly mixed and polymerized.

Remarks 2. Same as in sample (a), except that component B was polymerized first, and then component A was polymerized.

Remarks 3. Same as in sample (a) except that components A and B were polymerized separately and the resulting latices were blended.

Remarks 4. Same as in sample (a), except that components A and B were polymerized separately and blended in the form of powder.

Remarks 5. Polyvinyl chloride alone.

TABLE 2

| Sample No. | *1 Izod impact strength (N-cm/cm) | *2 Vicat softening point (°C) | *3 Light transmittance (%) | *4 Haze (%) |
|---|---|---|---|---|
| Example (a) | 32 | 85.0 | 84.5 | 1.2 |
| Example (b) | 30 | 86.0 | 85.0 | 1.1 |
| Example (c) | 32 | 86.0 | 85.0 | 1.1 |
| Comparative Example 1 | 28 | 81.0 | 36.8 | 33.2 |
| „ 2 | 34 | 83.0 | 54.3 | 21.3 |
| „ 3 | 30 | 85.0 | 57.6 | 18.1 |
| „ 4 | 32 | 80.0 | 75.0 | 3.4 |
| „ 5 | 28 | 86.0 | 85.0 | 1.0 |
| „ 6 | 32 | 86.0 | 84.0 | 1.2 |
| „ 7 | 34 | 82.5 | 78.0 | 2.6 |
| „ 8 | 32 | 85.0 | 84.5 | 1.1 |
| „ 9 | 32 | 85.0 | 85.0 | 1.1 |
| „ 10 | 32 | 85.0 | 84.0 | 1.2 |
| „ 11 | 30 | 79.0 | 83.0 | 2.6 |

(Note) *1 In accordance with JIS K7110
　　　 *2 In accordance with JIS K7206
　　　 *3 Measured using a 1.5 mm thick press plate according to JIS K6714
　　　 *4 Measured using a 1.5 mm thick press plate according to JIS K6714

TABLE 3

| Sample No. | Appearance of extruded sheet *5 | Sticking to roll mill *6 | Appearance of roll-mixed sheet *7 | Brabender mixing torque kg-m *8 |
|---|---|---|---|---|
| Example (a) | A | A | A | 1.9 |
| Example (b) | A—B | A—B | A | 1.9 |
| Comparative Example 5 | D | C—D | A—B | 2.0 |
| „ 6 | Not moldable | A | D | 2.6 |
| „ 8 | C—D | B | A | 1.9 |
| „ 9 | C | A | A | 1.9 |
| „ 10 | D | A | A | 1.9 |

7

Footnotes:

(Note) *5 The appearance of molded sheets were observed with naked eyes and classed by four ranks, A, B, C, and D.
Rank A: Sheet has a good appearance, with no ungelled particles.
Rank B: Sheet contains less than five ungelled particles in 500 cm$^3$.
Rank C: Sheet contains 6 to 20 ungelled particles in 500 cm$^3$.
Rank D: Sheet contains more than 21 ungelled particles in 500 cm$^3$.

*6 The time for the composition to stick to the roll surface of a roll mill at 205°C and 20 rpm was classed by four ranks A, B, C, and D.
Rank A: No sticking after 10 minutes of mixing.
Rank B: Sticking after 6 minutes of mixing.
Rank C: Sticking after 3 minutes of mixing.
Rank D: Sticking after 1 minute of mixing.

*7 The appearance of roll-mixed sheet was observed to check the surface finish and shrinkage, and was classed by four ranks A, B, C, and D.

*8 Mixing torque was measured using Plasti-Corder® made by Brabender Co., Ltd.

**Claim**

1. A polyvinyl chloride composition which comprises

(I) 99 to 30 parts by weight of polyvinyl chloride or a vinyl chloride compolymer in which at least 80 wt% is vinyl chloride, and

(II) 1 to 70 parts by weight of a polymer which is obtained by polymerizing

component (B) 1 to 30 wt% of a mixture composed of 40 to 80 wt% of styrene monomer and 60 to 20 wt% of alkyl ester of acrylic acid or alkyl ester of methacrylic acid (said alkyl group having 2 to 18 carbon atoms) in the presence of

a polymerization latex of component (A) 99 to 70 wt% of methyl methacrylate polymer or a copolymer of more than 75 wt% of methyl methacrylate and less than 25% of styrene monomer, said polymer or copolymer having a specific viscosity ($\eta_{sp}$, C = 0.4 g/100 ml benzene, 30°C) lower than 0,6, said polyvinyl chloride composition having improved processability, high clarity, and high heat distortion temperature.

**Patentanspruch**

Polyvinylchloridmasse aus

(I) 99 bis 30 Gewichtsteilen Polyvinylchlorid oder Vinylchlorid-Copolymerisat mit mindestens 80 Gewichtsprozent Vinylchlorid und

(II) 1 bis 70 Gewichtsteilen Polymerisat, das erhalten wurde durch Polymerisieren einer Komponente (B), 1 bis 30 Gewichtsprozent eines Gemisches aus 40 bis 80 Gewichtsprozent Styrol-Monomer und 60 bis 20 Gewichtsprozent Alkylester von Acrylsäure oder Alkylester von Methacrylsäure (wobei der Alkylrest 2 bis 80 Kohlenstoffatome enthält) in Gegenwart eines

Polymerisationslatex von Komponente (A), nämlich 99 bis 70 Gewichtsprozent Methylmethacrylat-Polymerisat oder -Copolymerisat mit mindestens 75 Gewichtsprozent Methylmethacrylat und höchstens 25% Styrol-Monomer, wobei das Polymerisat oder Copolymerisat eine spezifische Viskosität ($\eta_{sp}$, C = 0,4 g/100 ml Benzol, 30°C) unter 0,6 aufweist,
wobei die Polyvinylchloridmasse verbesserte Verarbeitbarkeit, hohe Klarheit und hohe Wärmeverformungstemperatur aufweist.

**Revendication**

Composition de chlorure de polyvinyle, qui comprend:

(I) 99 à 30 parties en poids de chlorure de polyvinyle ou d'un copolymère de chlorure de vinyle dans lequel au moins 80% en poids représentent du chlorure de vinyle, et

(II) 1 à 70 parties en poids d'un polymère, qui est obtenu par polymérisation

d'un composant (B), c'est-à-dire 1 à 30% en poids d'un mélange composé de 40 à 80% en poids de monomère de styrène et de 60 à 20% en poids d'ester alkylique d'acide acrylique ou d'ester alkylique d'acide méthacrylique (le groupe alkyle comportant de 2 à 18 atomes de carbone) en présence

d'un latex de polymérisation de composant (A), c'est-à-dire 99 à 70% en poids de polymère de méthacrylate de méthyle ou d'un copolymère de plus de 75% en poids de méthacrylate de méthyle et de moins de 25% de monomère de styrène, ce polymère ou copolymère ayant une viscosité spécifique ($\eta_{sp}$, C = 0,4 g/100 ml de benzène, 30°C) inférieure à 0,6, cette composition de chlorure de polyvinyle présentant une usinabilité améliorée, une clarté élevée et une température de déformation à chaud élevée.